# EUROPÄISCHE PATENTSCHRIFT

(11) **EP 3 302 857 B1**
(45) Veröffentlichungstag und Bekanntmachung des Hinweises auf die Patenterteilung: **28.07.2021**
(21) Anmeldenummer: 16727351.5
(22) Anmeldetag: 25.05.2016
(51) Int. Cl.: B25J 15/00, B23B 35/00, B23B 41/00, B23Q 3/08, B23Q 15/00, B23Q 17/22, B25J 11/00, B25J 15/06

(54) **VERFAHREN UND ANORDNUNG ZUM EINBRINGEN VON BOHRLÖCHERN IN EINE OBERFLÄCHE EINES STATIONÄR GELAGERTEN WERKSTÜCKES MIT EINEM AN EINEM KNICKARMROBOTER ANGEBRACHTEN BOHRWERKZEUG**
METHOD AND ARRANGEMENT FOR INTRODUCING BOREHOLES INTO A SURFACE OF A WORKPIECE MOUNTED IN A STATIONARY MANNER USING A BORING TOOL ATTACHED TO AN ARTICULATED-ARM ROBOT
PROCÉDÉ ET ENSEMBLE PERMETTANT DE RÉALISER DES TROUS DE FORAGE DANS UNE SURFACE D'UNE PIÈCE STATIONNAIRE À L'AIDE D'UN OUTIL DE PERÇAGE DISPOSÉ SUR UN ROBOT À BRAS ARTICULÉ

(30) Priorität: 03.06.2015 DE 102015210255
(43) Veröffentlichungstag der Anmeldung: 11.04.2018
(73) Patentinhaber: Fraunhofer-Gesellschaft zur Förderung der angewandten Forschung e.V., 80686 München (DE)
(72) Erfinder: WANNER, Martin Christoph, 18211 Nienhagen (DE); DRYBA, Steffen, 18198 Kritzmow (DE); GRÜNDLER, Mirko, 18057 Rostock (DE)
(74) Vertreter: Rösler, Uwe
(86) Internationale Anmeldenummer: PCT/EP2016/061785
(87) Internationale Veröffentlichungsnummer: WO 2016/193090

(56) Entgegenhaltungen:
- EP-A2- 1 988 438
- WO-A1-2009/117836
- DE-A1-102010 007 591
- DE-A1-102013 018 857
- DE-T2- 69 507 742
- JP-A- 2000 296 421
- US-A- 4 337 566
- US-A1- 2003 120 377
- US-A1- 2008 277 953
- US-A1- 2012 138 323
- MAOZHEN GONG ET AL: "A novel method of surface-normal measurement in robotic drilling for aircraft fuselage using three laser range sensors", ADVANCED INTELLIGENT MECHATRONICS (AIM), 2012 IEEE/ASME INTERNATIONAL CONFERENCE ON, IEEE, 11. Juli 2012 (2012-07-11), Seiten 450-455, XP032222527, DOI: 10.1109/AIM.2012.6266022 ISBN: 978-1-4673-2575-2
- SHUSHENG BI ET AL: "Robotic drilling system for titanium structures", THE INTERNATIONAL JOURNAL OF ADVANCED MANUFACTURING TECHNOLOGY, SPRINGER, BERLIN, DE, Bd. 54, Nr. 5 - 8, 12. Oktober 2010 (2010-10-12), Seiten 767-774, XP019897968, ISSN: 1433-3015, DOI: 10.1007/S00170-010-2962-2
- SCHNEIDER ULRICH ET AL: "Improving robotic machining accuracy through experimental error investigation and modular compensation", INTERNATIONAL JOURNAL OF ADVANCED MANUFACTURING TECHNOLOGY, SPRINGER VERLAG, LONDON; GB, Bd. 85, Nr. 1, 10. Juni 2014 (2014-06-10), Seiten 3-15, XP035987319, ISSN: 0268-3768, DOI: 10.1007/S00170-014-6021-2 [gefunden am 2014-06-10]

## Beschreibung

### Technisches Gebiet

Die Erfindung bezieht sich auf ein Verfahren gemäß dem Oberbegriff des Anspruchs 1 zum hochgenauen Einbringen von Bohrlöchern, vorzugsweise in Form von Sacklöchern, in eine beliebig geformte Oberfläche eines stationär gelagerten Werkstückes mit einem an einem Knickarmroboter endseitig angebrachten und von diesem räumlich positionierbaren Bohrwerkzeug. Ein solches Verfahren ist aus der DE 10 2010 007591 A1 bekannt.

### Stand der Technik

Knickarmroboter sind vielseitig und weit verbreitet eingesetzte Industrieroboter, deren Kinematik aus mehreren gelenkig miteinander verbundenen Armgliedern aufgebaut ist, um Endeffektoren, wie bspw. Werkzeuge zu Zwecken einer Werkstückbearbeitung zu führen und zu positionieren. Unter der Vielzahl möglicher Ausgestaltungsformen derartiger Roboter besitzen jene die höchste Beweglichkeit und Flexibilität, die über eine serielle Kinematik verfügen, d.h. jedes Armglied ist seriell mit einem weiteren Armglied verbunden.

Der Druckschrift WO 84/02301 ist ein typischer, so genannter sechsachsiger vertikaler Knickarmroboter zu entnehmen, dessen erstes Armglied schwenkbar, einseitig endseitig an einer, um eine erste Achse, die der Vertikalachse entspricht, drehbar gelagerten Basis gefügt ist. Die Schwenkachse, um die das erste Armglied schwenkbar gelagert ist, wird als zweite Achse bezeichnet und ist orthogonal zur ersten Achse, d. h. horizontal orientiert. Das zweite Armglied ist seinerseits endseitig mit dem der Basis gegenüberliegenden Ende des ersten Armgliedes gleichfalls schwenkbar verbunden, nämlich um eine dritte Schwenkachse, die parallel zur zweiten Achse orientiert ist. Schließlich ist an dem der dritten Achse gegenüberliegenden Ende des zweiten Armgliedes eine, um drei Achsen drehbar gelagerte Zentralhand zur Aufnahme, bspw. eines Werkzeuges, angebracht.

Der Druckschrift DE 10 2013 018 857 A1 ist ein weiterer Knickarmroboter mit zwei Parallel-Kinematiken zu entnehmen, der an einer um eine vertikalen ersten Achse drehbaren Basis befestigt ist und zwei, in Art einer kinematischen Kette hintereinander angeordnete Armglieder besitzt, von denen ein erstes Armglied um eine zur ersten Achse orthogonal orientierten, zweiten Achse an der Basis schwenkbar gelagert und ein zweites Armglied um eine parallel zur zweiten Achse orientierten, dritten Achse an dem ersten Armglied schwenkbar angebracht sind. Endseitig an der kinematischen Kette ist eine Zentralhand angebracht. Zum Schwenken des ersten Armgliedes um die zweite Achse ist ein erster Linearaktuator vorgesehen, der über ein erstes Koppelgetriebe einerseits mit der Basis und andererseits mit dem ersten Armglied in Wirkverbindung steht. Für das Schwenken des zweiten Armglieds um die dritte Achse ist ein zweiter Linearaktuator vorgesehen, der über ein zweites Koppelgetriebe mit der Basis, dem ersten Armglied und dem zweiten Armglied in Wirkverbindung steht. Beide Linearaktuatoren sind jeweils als Spindelantriebe ausgebildet und sehen jeweils eine motorisch angetriebene Spindelmuttereinheit vor, die in Eingriff mit einer Spindel in Form einer Gewindestange steht, die um eine zur zweiten Achse parallel orientierten Schwenkachse schwenkbar gelagert ist.

Alle bekannten Knickarmroboter, die seriell-kinematisch miteinander verbundene Armglieder aufweisen und somit über maximale Roboterreichweiten von einigen Metern verfügen, unterliegen dem Problem einer im Vergleich zu Werkzeugmaschinen geringen System-Steifigkeit, wodurch der Einsatz derartiger Industrieroboter zu Zwecken der Werkstückbearbeitung problematisch ist, zumal die Reaktionskräfte und -momente, die durch den Bearbeitungsprozess herrühren, zu Schwingungen der gesamten kinematischen Kette des Roboters führen. Hierdurch ergeben sich Limitierungen in Bezug auf Bearbeitungs-geschwindigkeiten sowie auch Bearbeitungsgenauigkeiten. Sehr lange kinematische Ketten besitzen neben dem erwähnten Nachteil bezüglich der geringen Steifigkeit, eine geringe Absolutgenauigkeit, wodurch bspw. das Bohren hochgenauer Bohrlöcher zusätzlich erschwert ist. Roboter sind jedoch flexibler einsetzbar und gleichzeitig kostengünstiger als Werkzeugmaschinen, sodass der Bedarf nach einer Behebung der aufgezeigten Problems besteht.

Der Druckschrift, DE 10 2010 007 591 A1, ist eine Arbeitsvorrichtung mit Roboter auf einer verfahrbaren Plattform zu entnehmen, mit der ein endseitig mit einem Bearbeitungswerkzeug bestückter Arbeitsroboter individuell an ein Werkstück positioniert werden kann. Für eine exakte Lageausrichtung des Roboters sowie auch des Werkzeuges relativ zum Werkstück dienen optische Positionierhilfen. Für eine präzise und wirtschaftliche Bearbeitung großbauender Werkstücke mit Dimensionen von mehreren Metern eignen sich jedoch keine kleinbauenden und sich auf Fahrgestelle fortbewegende Robotersysteme, zumal den Zeitaufwand für jede Neupositionierung unnötig Zeit in Anspruch nimmt.

Die Druckschrift US 2008/0277953 A1 offenbart einen Roboterendeffektor mit einer Klemmvorrichtung, an der ein Werkzeug zum Zwecke einer Werkstückbearbeitung angebracht ist. Der Bearbeitungsvorgang mit Hilfe des Werkzeuges erfolgt nach entsprechender Fixierung der Klemmvorrichtung am Werkzeug selbst, das über eine geeignete Klemmstruktur verfügen muss. Für eine erfolgreiche Anwendung des bekannten Roboterendeffektors ist wenigstens werkstückseitig eine mit der Klemmvorrichtung umgreifende Kontur vorzusehen.

Die Druckschrift US 4,337,566 beschreibt ein Kalibriersystem, das sicherstellen soll, Bohrlöcher mit einer vorgegebenen Bohrlochtiefe in ein Werkstück einzubringen.

### Darstellung der Erfindung

Der Erfindung liegt die Aufgabe zugrunde, ein Verfahren zum hochgenauen Einbringen von Bohrlöchern, vorzugsweise in Form von Sacklöchern, in eine beliebig geformte Oberfläche eines stationär gelagerten Werkstückes mit einem an einem Knickarmroboter endseitig angebrachten und von diesem räumlich positionierbaren Bohrwerkzeug derart auszubilden, dass zum einen eine möglichst schnelle und hochgenaue Positionierung des Knickarmroboter-geführten Bohrwerkzeuges relativ zu einem zu bearbeitenden Werkstück möglich wird, dessen zu bearbeitende Werkstückoberfläche vornehmlich über Freiformflächen verfügt. Zum anderen soll die Werkstückbearbeitung mit dem am Knickarmroboter angebrachten Bohrwerkzeug höchsten qualitativen sowie auch maßhaltigen Bearbeitungsansprüchen standhalten und dies vor allem an zu bearbeitenden Werkstücken, deren räumliche Ausmaße jenen des Knickarmroboters entsprechen bzw. diese übertreffen.

Die Lösung der der Erfindung zugrunde liegenden Aufgabe ist im Verfahrensanspruch 1 angegeben. Das erfindungsgemäße Verfahren in vorteilhafter Weise weiterbildende Merkmale sind Gegenstand der Unteransprüche sowie der weiteren Beschreibung, insbesondere unter Bezugnahme auf die Ausführungsbeispiele zu entnehmen.

Der Erfindung liegt die Idee zugrunde, die kinematische Kette des vorzugsweise vertikalen Knickarmroboters, die je nach Größe und Ausbildung des Knickarmroboters eine Roboterarm- bzw. kinematische Kettenreichweite von mehreren Metern, d.h. typischerweise 2 bis ca. 10 m betragen kann, vor und während der Ineingriffnahme des Bohrwerkzeuges mit dem Werkstück zusätzlich am Werkstück selbst mechanisch abzustützen, um auf diese Weise den Knickarmroboter zu stabilisieren. Die mechanische Abstützung erfolgt durch eine mechanische Verbindung zwischen dem endseitigen Knickarmroboterende, an dem das Bohrwerkzeug angebracht ist, und dem Werkstück. Die mechanische Verbindung wird nach Erreichen einer vorgebbaren Roboterposition und Lageausrichtung des Bohrwerkzeuges relativ zum Werkstück hergestellt. Die korrekte Positionierung und Lageausrichtung des Knickarmroboter geführten Bohrwerkzeuges relativ zum Werkstück wird mittels eines Lasertrackingsystems erfasst gegebenenfalls nachkorrigiert bis das Bohrwerkzeug hochgenau positioniert ist. Durch die zusätzlich zur Werkzeug-Ineingriffnahme endseitige Abstützung der kinematischen Kette während der Oberflächenbearbeitung an dem Werkstück vermögen bearbeitungsbedingte Kräfte und Momente in einem weit geringeren Maße Schwingungen längs des Knickarmroboters hervorzurufen, wodurch die Qualität sowie auch die Geschwindigkeit, mit der der Bohrvorgang durchgeführt werden kann, signifikant verbessert werden können. Die Schwingungsreduzierung kann in vorteilhafter Weise durch eine geeignet gewählte elastische bzw. federnde Ausbildung der mechanischen Verbindung zwischen Knickarmroboter und Werkstück unterstützt werden.

Durch die endseitige mechanische Abstützung der kinematischen Kette des Knickarmroboters am Werkstück selbst bildet der Knickarmroboter ein zweiseitig fest eingespanntes, mechanisches System, d.h. einerseits ist der Knickarmroboter fest an der Roboterbasis eingespannt, andererseits erfindungsgemäß über die lösbare, feste mechanische Verbindung zum Werkstück abgestützt. Der Kontakt der mechanischen Verbindung zum Werkstück kann von einer bloßen Roboterkraft-beaufschlagten, losen Flächenfügung bzw. Reibschlussfügung bis hin zu einer aktiv anhaftenden Oberflächenfügung reichen, bei der pneumatisch oder magnetisch generierte Haftkräfte für eine lösbar feste Anhaftung der mechanischen Verbindung an das Werkstück beitragen.

Für eine möglichst stabile und schwingungsarme Lagerung der kinematischen Kette des Knickarmroboters während der Oberflächenbearbeitung gilt es dafür Sorge zu tragen, dass das zu bearbeitende Werkstück stationär und stabil gelagert ist. Je nach Größe, Gewicht und Ausbildung des zu bearbeitenden Werkstückes gilt es, entsprechende Vorkehrungen zu treffen, mit denen das Werkstück stabil gelagert wird, so dass die von Seiten des Knickarmroboters während der Oberflächenbearbeitung auf das Werkstück einwirkenden Kraft- und Lastmomente von diesem vollständig aufgenommen werden können. Entweder gilt es das Werkstück mit Hilfe entsprechender Halte- und/oder Fixiervorkehrungen stabil zu lagern oder aber das Werkstück verfügt über eine ausreichend große träge Masse, durch deren Gewichtskraft eine eigenstabile stationäre Lagerung auch während der Oberflächenbearbeitung gewährleistet ist.

Das erfindungsgemäße Verfahren eignet sich in bevorzugter Weise für die Werkstückbearbeitung sehr großer und schwergewichtiger Werkstücke, wie beispielsweise Werkstücke aus dem Flugzeugbau- und Schiffsbaubereich. So gilt es bspw. entsprechende Oberflächenbearbeitungen an Rumpfschalen von Flugzeugen oder an Schiffsschrauben bzw. Schiffspropeller zum Antrieb großer Schiffe, wie beispielsweise Container-Schiffe, vorzunehmen. Derartige Schiffspropeller verfügen über Propellerdurchmesser von mehreren Metern, typischerweise zwischen 4 m und 12 m, sowie über ein Eigengewicht, das den vorstehend erläuterten Anforderungen an eine stationäre stabile Lagerung zu Zwecken der Oberflächenbearbeitung mit einem Knickarmroboter geführten Bohrwerkzeug zweifelsohne gerecht wird.

Gilt es an einem großen Werkstück, dessen Werkstückoberfläche zumindest teilweise aus einer Freiformoberfläche besteht, Bohrlöcher an definiert vorgegebenen Bearbeitungsorten mit definierten Bohrlochtiefen einzubringen, ohne dabei den Schiffspropeller anzuheben oder zu wenden, so ist ein vertikaler Knickarmroboter zur Ausführung einer derartigen Werkstückbearbeitung als besonders geeignet anzusehen, zumal Knickarmroboter zur Werkzeugführung mit entsprechend großen Dimensionen realisierbar sind. Ein bevorzugter Knickarmroboter, der über zwei schwenkbar gelenkig miteinander verbundene Armglieder verfügt, von denen jedes Armglied eine Armlänge von bis zu fünf Metern aufweisen kann, ist in der DE 10 2013 018 857 A1 erläutert. Dieser bekannte vertikale Knickarmroboter eignet sich zur Realisierung und Durchführung des erfindungsgemäßen Verfahrens in besonderer Weise, so dass in Zusammenhang mit Fragen bezüglich der Ausgestaltung des Robotersystems, das das Werkzeug führt und räumlich positioniert, auf den gesamten Offenbarungsgehalt der vorstehenden Druckschrift verwiesen wird.

Zur Durchführung des erfindungsgemäßen Bohrvorganges an einem stationär gelagerten Werkstück, beispielswiese eines vorstehend erwähnten Schiffspropellers, mit einem an einem Knickarmroboter endseitig angebrachten und von diesem räumlich positionierbaren Bohrwerkzeug sind die Verfahrensschritte gemäß Anspruch 1 vorzunehmen. Zunächst wird das Knickarmroboter-geführte Bohrwerkzeug an eine Raumposition relativ zum Werkstück positioniert, die einem vorbestimmten Bearbeitungsort an der Werkstückoberfläche in einem vorgebbaren Abstand gegenüber liegt. Hierzu sind der Knickarmroboter sowie auch das zu bearbeitende Werkstück derart relativ zueinander zu lagern, so dass die Erreichbarkeit des Knickarmroboter-geführten Bohrwerkzeuges an die jeweils vorgegebenen Bearbeitungsorte an der Werkstückoberfläche gewährleistet ist.

Nach entsprechender Positionierung des Knickarmroboter-geführten Bohrwerkzeuges, die wie im Weiteren zu entnehmen ist, prozessüberwacht durchgeführt wird, wird erfindungsgemäß eine lösbar feste mechanische Verbindung zwischen der Werkstückoberfläche und dem Knickarmroboter hergestellt, die zu einer einseitig endseitigen festen Einspannung des Knickarmroboters gegenüber dem Werkstück führt.

In einem anschließenden Prozess erfolgt die Oberflächenbearbeitung durch Annähern des Bohrwerkzeuges an den Bearbeitungsort und anschließender Ineingriffnahme des Bohrwerkzeuges mit dem Werkstück am Bearbeitungsort während der Knickarmroboter endseitig mit dem Werkstück verbunden ist.

Nach Fertigstellung der Bohrung wird die mechanische Verbindung gelöst und das Knickarmroboter-geführte Bohrwerkzeug vom Bearbeitungsort entfernt und gegebenenfalls neu gegenüber dem Werkstück positioniert.

Zur Durchführung des erfindungsgemäßen Verfahrens sieht der Knickarmroboter eine Steuereinheit zur räumlichen Positionierung und Lageausrichtung des am Roboterarmende des Knickarmroboters angebrachten Bohrwerkzeuges vor, so dass eine schnelle Annäherung des Knickarmroboter-geführten Bohrwerkzeuges an die dem Bearbeitungsort beabstandet gegenüber liegende Raumposition ausschließlich mit Hilfe der Knickarmroboter zueigenen Roboterkinematik möglich ist.

Der schnelle Positionier- und Annäherungsvorgang erfolgt in Kenntnis eines die Raumform des zu bearbeitenden Werkstückes beschreibenden binären Datensatzes, des an der Werkstückoberfläche vorgegebenen Bearbeitungsortes sowie eines dem Bohrwerkzeug zugeordneten Werkzeugmittelpunktes, wobei die relative räumliche Positionen des Knickarmroboter-geführten Bohrwerkzeuges sowie des vorgegebenen Bearbeitungsortes an der Werkstückoberfläche messtechnisch erfasst und überwacht werden. Zur messtechnischen Erfassung der räumlichen Relativpositionen von Werkstück und dem Knickarmroboter-geführten Bohrwerkzeug dient ein berührungslos arbeitendes Trackingsystems, bspw. ein Lasertrackingsystem, das zumindest ein die räumliche Lage des Werkstückes beschreibendes Werkstückkoordinatensystem (WKS) sowie ein die räumliche Lage des Knickarmroboters beschreibendes Roboterkoordinatensystem (RKS) hochgenau generiert, wobei beide Koordinatensysteme in einen räumlichen Bezug zueinander gebracht werden.

Zudem befindet sich am Endbereich der kinematischen Kette des Knickarmroboters eine vorzugsweise berührungslos arbeitende Abstandssensorik, die den Abstand zwischen dem Knickarmroboter-geführten Bohrwerkzeug und dem Bearbeitungsort am Werkstück erfasst. Vorzugsweise vermag die Abstandssensorik neben der exakten Abstandserfassung auch die räumliche Lage des Bohrwerkzeuges relativ zur Werkstückoberfläche im Bereich des Bearbeitungsortes zu detektieren, wodurch eine Kontrolle und gegebenenfalls Korrektur der räumlichen Lage des am Knickarmroboter endseitig angebrachten und von diesem an die Raumposition positionierten Bohrwerkzeuges relativ zur Werkstückoberfläche durchgeführt werden kann, so dass das Bohrwerkzeug an der Raumposition eine vorgebbare Soll-Lage autonom einnehmen kann. Zudem kann die Lagekontrolle des an der Raumposition positionierten Bohrwerkzeuges in Kombination oder alternativ auf der Grundlage der mit dem Lasertrackingsystem gewonnenen Raum- und Lageinformationen vorgenommen oder zumindest unterstützt werden. Aber auch bearbeitungsbedingte Abweichungen von der Soll-Lage während der Oberflächenbearbeitung können mit der vorhandenen Sensorik erfasst werden, die zu Zwecken einer Lage-Nachjustierung und/oder Beurteilung des Bohrvorganges verwendet werden können. So lässt sich beispielsweise die Bohrlochtiefe eines robotergeführten Bohrers aus den Sensorsignalen erschliessen.

Neben der berührungslos arbeitenden Abstandssensorik, vorzugsweise in Form dreier separat angebrachter Lasertracker, ist am Roboterarmende eine mechanische Verbindungseinheit zum Herstellen einer den Knickarmroboter am Werkstück einseitig abstützenden und an der Werkstückoberfläche lösbar festen mechanischen Verbindung angebracht. Die drei Linearaktoren der Verbindungseinheit, die vorzugsweise als Teleskopkinematik ausgebildet sind, weisen jeweils ein dem Werkstück zugewandt angeordnetes Fügemittel auf. Das Fügemittel ist derart ausgebildet, dass es sich möglichst flächendeckend an die Werkstückoberfläche anschmiegt. In einem ersten Ausführungsbeispiel kontaktiert das Fügemittel die Werkstückoberfläche lediglich kraftbeaufschlagt, bedingt durch eine ausschließlich vermittels des Knickarmroboters generierbaren Anpresskraft zur Herstellung einer rein mechanischen Reibschlussfügung. In einem bevorzugten Ausführungsbeispiel vermag eine zusätzliche Haftkraft das Fügemittel des wenigstens einen Linearaktors an der Werkstückoberfläche zu fixieren. Zur Erzeugung der zusätzlichen Haftkraft eignet sich eine steuerbare magnetische oder pneumatische Krafteinheit. Die mechanische Verbindung zwischen dem Knickarmroboter und dem Werkstück wird erfindungsgemäß mittels drei separater Linearaktoren realisiert, die unabhängig voneinander aktiviert und ausgelenkt werden können, wodurch eine Lagestabile Platzierung des endseitigen Roboterarmes relativ zum Werkstück möglich wird, die insbesondere ein laterales Auswandern bzw. Verrutschen der Roboterkinematik relativ zur Werkstückoberfläche sicher ausschließt.

Es hat sich vor allem bei der Bearbeitung von großbauenden Werkstücken, wie bspw. Schiffspropeller, Flugzeugteilen etc. gezeigt, dass das Werkstück durch das kraftbeaufschlagte Anpressen der am Roboterarmende angebrachten mechanischen Verbindungseinheit Verformungen und/oder Lageveränderungen durch ein Lagerungsbedingtes Ausweichen des Werkstückes unterliegen kann, die letztlich zu Fehlpositionierungen des Bohrwerkzeuges relativ zu den am Werkstück vorgesehenen Bohrpositionen führen können. Um derartige fehlerhafte Abweichungen auszuschließen, sieht das erfindungsgemäße Verfahren vor, zum Zwecke der Feststellung, ob und in welchem Maße sich eine derartige kraftbedingte Fehlpositionierung des Werkstückes einstellt, vor der Durchführung eines Bohrvorganges am Werkstück, die Knickarmroboter getragene Verbindungseinheit am Werkstück, bevorzugt am Bearbeitungsort oder im Bereich des Bearbeitungsortes, kraftbeaufschlagt zu platzieren. Anschließend erfolgt eine exakte räumliche Vermessung des Werkstückes vermittels des Trackingsystems, wobei die exakten Raumkoordinaten von vorzugsweise drei an jeweils unterschiedlichen, vom Trackingsystem erfassbaren Oberflächenbereichen des Werkstückes angebrachten Messmarkierungen ermittelt werden. Mit der exakten Lageerfassung des Werkstückes, während der Knickarmroboter kraftbeaufschlagt am Werkstück anliegt, kann eine mögliche Abweichung zwischen der Werkstückseitigen Bohrlochposition und dem Roboterseitig angebrachten Bohrwerkzeug mittels des Trackingsystems festgestellt werden. Zu Korrekturzwecken wird der Knickarmroboter mit der an diesem endseitig angebrachten Verbindungseinheit unter Berücksichtigung der festgestellten Lagekorrektur gegenüber dem Werkstück erneut positioniert, um mit dem Bohrvorgang zu beginnen.

Diese Vorgehensweise ist insofern als besonders vorteilhaft zu bezeichnen, zumal nicht nur werkstückseitige Lageänderungen auf diese Weise vor dem eigentlichen Bohrvorgang erfasst werden, sondern auch Roboterseitige Verformungen detektierbar sind. Grundsätzlich ist es möglich, den bloßen Anpressvorgang des Knickarmroboters an das Werkstück an jeder Bohrposition vor dem eigentlichen Bohrvorgang durchzuführen, um mögliche Fehlpositionierungen zu erfassen. Dies führt jedoch zu einem zeitlichen Mehraufwand bei der Durchführung des gesamten Bohrvorhabens. Ebenso ist es möglich vor der Durchführung einer bestimmten Anzahl von Bohrvorgängen, die an unterschiedlichen Bohrpositionen durchzuführen sind, die allesamt räumlich eng benachbart an der Oberfläche des Werkstückes liegen, eine mögliche Fehlpositionierung durch einmaliges kraftbeaufschlagtes Anpressen der Verbindungseinheit des Knickarmroboters im Bereich der Bohrpositionen zu erfassen. Im Anschluss daran kann die Anzahl von Bohrvorgängen unter Berücksichtigung der einmal vorab festgestellten Fehlpositionierung und einer davon abgeleiteten Lagekorrektur unterbrechungsfrei durchgeführt werden. Zum Zwecke der Bohrung wird das Bohrwerkzeug nach Herstellen der an der Werkstückoberfläche lösbaren mechanischen Verbindung in Betrieb genommen und prozessüberwacht gegen die Werkstückoberfläche verfahren. Grundsätzlich können auf diese Weise Bohr-, Fräs-, Schneid-, Schleif- oder sonstige abrasive Bearbeitungsvorgänge an der Werkstückoberfläche durchgeführt werden. Im Weiteren wird die Durchführung des Hochpräzisionsbohrens erläutert, bei dem ein Bohrer eingesetzt wird, der mittels einer endseitig am Knickarmroboter angebrachten NC-Vorschubeinheit gegen das Werkstück verfahren wird. Der prozessüberwachte Bohrvorgang wird beendet sobald eine vorgegebene Bohrtiefe erreicht ist.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: Darstellung einer Anordnung zum Einbringen von Bohrlöchern in einen Schiffspropeller,
- Fig. 2a, b, c: Vielseitenansicht einer endseitig an der kinematischen Kette des Knickarmroboters angebrachten Bohrspindelanordnung mit einer zur Ausbildung einer mechanischen Verbindung zum Werkstück dienenden Verbindungseinheit,
- Fig.3: Schiffspropeller unter Krafteinfluss,
- Fig. 4a, b: Schiffspropeller im Ruhezustand und im Bearbeitungszustand,
- Fig. 5: Bohranordnung positioniert an der Werkstückoberfläche sowie
- Fig. 6-8: Annhäherungsvorganges des Bohrwerkzeuges an die Werkstückoberfläche.

### Wege zur Ausführung der Erfindung, gewerbliche Verwendbarkeit

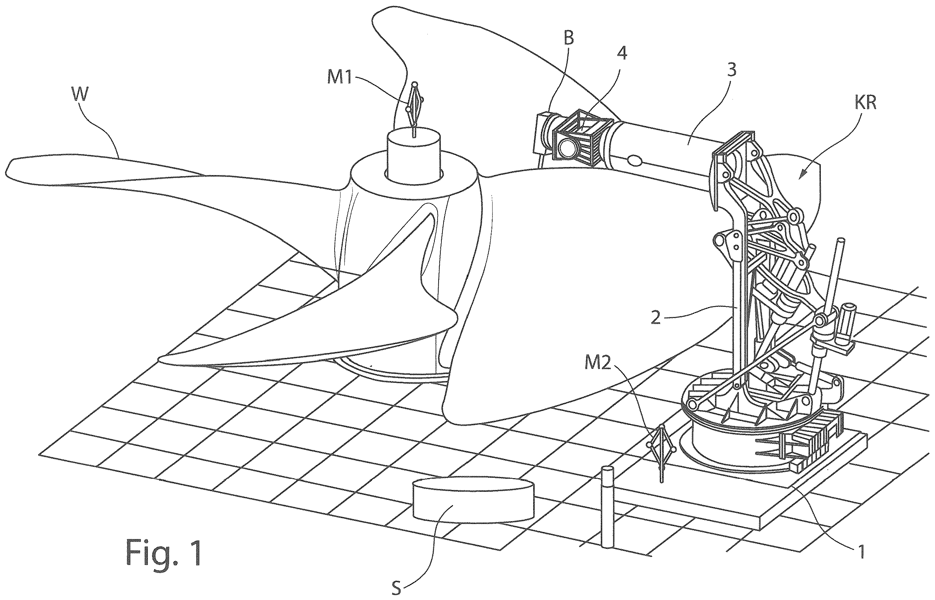

In Figur 1 ist ein zu bearbeitendes Werkstück W in Form eines Schiffspropellers dargestellt, das es gilt an bestimmt vorgegebenen Bearbeitungsorten mit Bohrlöcher zu versehen. Aufgrund der Größe sowie der vorwiegend aus Freiformflächen bestehenden Oberfläche des Werkstückes W eignet sich zur Nachbearbeitung des Werkstückes lediglich ein großbauender, vertikaler Knickarmroboter KR, an dessen aus zwei Armgliedern 2, 3 zusammengesetzte kinematischer Kette endseitig eine Bohranordnung B angebracht ist. Der Knickarmroboter KR der in aller Ausführlichkeit in der Druckschrift DE 10 2013 018 857 A1 beschrieben ist, verfügt über einen Roboterarm, der an einer um die Vertikalachse drehbaren Basis 1 befestigt ist. Der Roboterarm verfügt über zwei in Art einer kinematischen Kette hintereinander angeordnete Armglieder 2, 3, von denen das erste Armglied 2 um eine zur Vertikalachse orthogonal orientierte zweite Achse an der Basis 1 schwenkbar gelagert ist. Das zweite Armglied 3 ist um eine parallel zur zweiten Achse orientierte dritte Achse an dem ersten Armglied 1 schwenkbar angebracht. Endseitig an der kinematischen Kette, das heißt am endseitigen Ende des zweiten Armgliedes 3 ist eine Zentralhand 4 angebracht, an der die Bohranordnung B über einen im weiteren näher zu beschreibenden Tragrahmen angebracht ist. Zur Erläuterung der weiteren Komponenten des Knickarmroboters KR wird auf den Offenbarungsgehalt der vorstehend genannten Druckschrift verwiesen. Gleichsam ist es möglich anstelle der Bohreranordnung B ein weiteres Armglied an der Zentralhand 4 anzubringen, nicht dargestellt. Vorzugsweise verfügt das weitere Armglied über eine teleskopartige Verlängerungsmechanik und ist auf diese Weise auf eine bedarfsgerechte Armlänge verlängerbar, Am Ende dieses zusätzlichen, teleskopartigen Armgliedes kann die Bohreranordnung B installiert werden.

Die Armglieder 2, 3 des vertikalen Knickarmroboters KR können jeweils Armlängen zwischen 2,5 und 3,5 Meter aufweisen. Dies verdeutlicht den überaus großen zugänglichen Arbeitsbereich des Knickarmroboters KR, so dass Werkstücke W mit Bauhöhen von mehreren Metern mit Hilfe eines am Knickarmroboter KR endseitig angebrachten Werkzeuges einer Oberflächenbearbeitung unterzogen werden können, ohne dabei das Werkstück W selbst bewegen zu müssen.

Zur Durchführung der Oberflächenbearbeitung bedarf es zunächst einer Erfassung der räumlichen Anordnung des zu bearbeitenden Werkstückes W sowie des Knickarmroboters KR, insbesondere des endseitig am Knickarmroboter KR angebrachten Werkzeuges, das im Beispiel als Bohranordnung B ausgebildet ist. Hierzu ist ein berührungslos arbeitendes, ortsauflösendes Objekterfassungssystem, beispielsweise in Form eines Lasertrackers LT vorgesehen. Der Lasertracker LT vermag mit Hilfe einer am Werkstück W geeignet angebrachten und ausgebildeten Markierung M1 ein die räumliche Lage des Werkstückes W definierendes Werkstückkoordinatensystem WKS zu erfassen. In der gleichen Weise vermag der Lasertracker LT mit Hilfe einer dem Knickarmroboter KR fest zugeordneten Markierung M2 ein dem Knickarmroboter zuordenbares Roboterkoordinatensystem RKS zu generieren, durch das auch die räumliche Lage der am Knickarmroboter KR befestigten Bohranordnung B bestimmbar ist.

Das von Seiten des Lasertrackers LT erfasste Werkstückkoordinatensystem sowie das Roboterkoordinatensystem werden einer Steuereinheit S zugeführt, in der beide Koordinatensysteme in einen räumlichen Bezug zueinander gesetzt werden.

Unter Vorgabe von Raumkoordinaten, die einen Bearbeitungsort an der Werkstückoberfläche des Werkstückes W definieren, an dem eine Bohrung vorgenommen werden soll, positioniert der Knickarmroboter KR die an ihm befestigte Bohranordnung B an einer Raumposition, die dem vorgegebenen Bearbeitungsort an der Werkstückoberfläche in einem vorgegebenen Abstand gegenüberliegt. Der Positioniervorgang erfolgt sehr schnell mit Hilfe der Knickarmroboterkinematik. Nach erfolgter Positionierung wird die aktuelle Raumposition der Bohranordnung B, insbesondere die Raumposition eines dem Bohrwerkzeug zugeordneten Werkzeugschwerpunktes, mit Hilfe des Lasertrackers LT erfasst und überprüft. Im Falle einer festgestellten Abweichung von einer vorgegebenen Sollposition justiert der Knickarmroboter KR entsprechend nach. Der Vorgang der Nachjustierung kann mehrfach erfolgen bis die exakte Raumposition angefahren ist.

Befindet sich die Bohranordnung B in einer korrekten Raumposition, die dem Bearbeitungsort an der Werkstückoberfläche gegenüberliegt, so erfolgen eine messtechnische Erfassung sowohl des Abstandes zwischen der Bohranordnung B und der Werkstückoberfläche sowie der Orientierung bzw. der räumlichen Lage der Werkstückoberfläche am Bearbeitungsort relativ zur Bohranordnung B.

Hierzu sind um die bzw. an der Bohranordnung B Laserabstandssensoren, vorzugsweise drei separate Laserabstandssensoren, angebracht. Auf der Basis der mit den Laserabstandssensoren erfassten Abstandswerte ist es möglich die Bohrerlängsachse exakt orthogonal zur Werkstückoberfläche am Bearbeitungsort auszurichten.

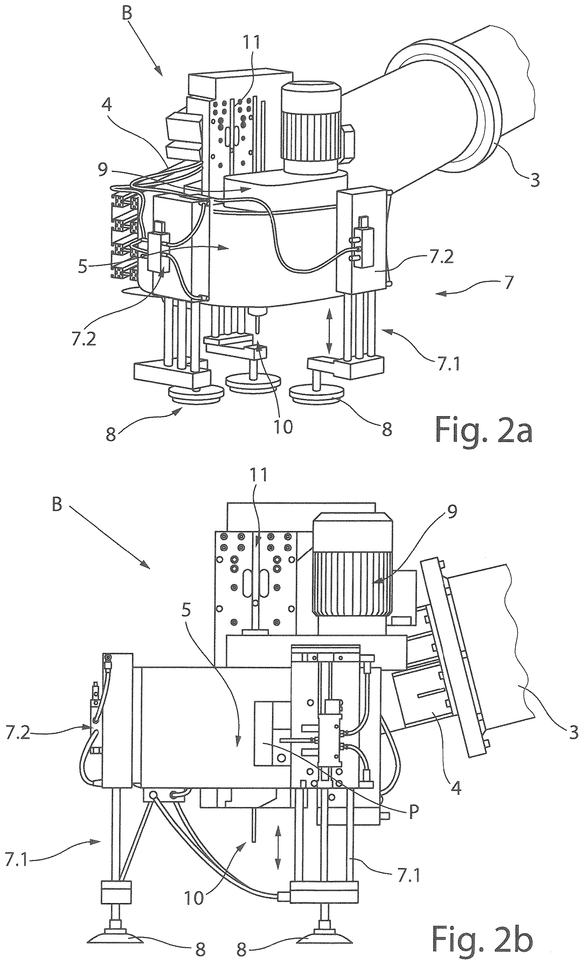

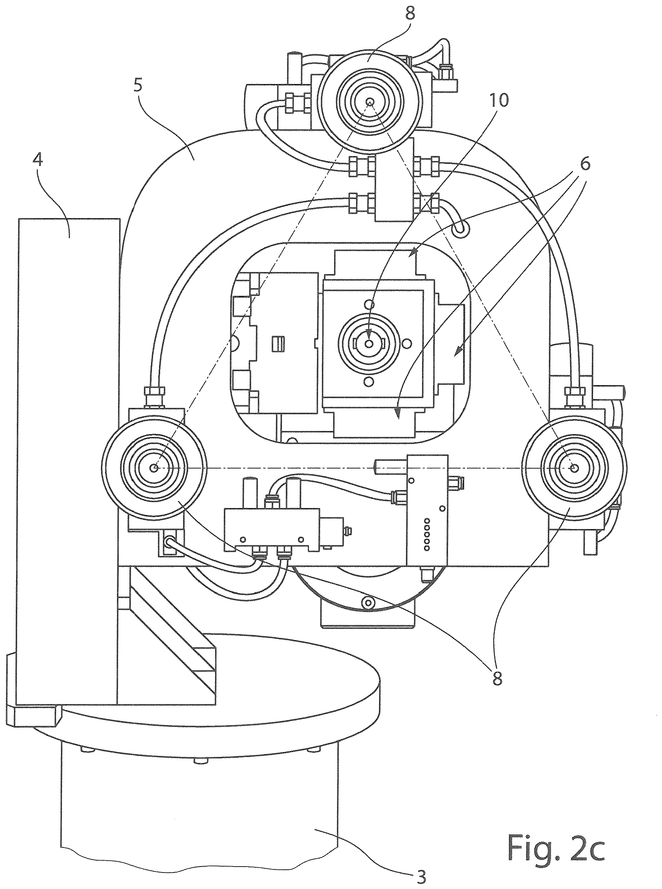

Zur Veranschaulichung der an der Zentralhand 4 des Knickarmroboters KR angebrachten Bohranordnung B sei im Weiteren auf die Figuren 2 a bis c verwiesen, die Bohranordnung B aus unterschiedlichen Blickrichtungen illustrieren. Die Figuren 2a und b zeigen die Bohranordnung B aus zwei unterschiedlichen Seitenblickrichtungen, Figur 2c stellt die Bohranordnung B axial zur Bohrerlängsachse von unten dar. Die weiteren Erläuterungen beziehen sich auf alle drei Figuren 2a bis 2c gleichermaßen.

An der endseitig des zweiten Armgliedes 3 vorgesehenen Zentralhand 4 ist ein Tragrahmen 5 fest angeordnet, an dem mehrere, für den Bohrvorgang relevante Komponenten angebracht sind. Unter anderem sind drei Laserabstandssensoren 6 mittelbar fest mit dem Tragrahmen 5 verbunden, die die räumliche Lage des Tragrahmens 5 sowie dessen Abstand zur Werkstückoberfläche zu erfassen vermögen.

Nachdem die Bohranordnung B prozessüberwacht die korrekte Lage gegenüber dem Werkstück W an der Raumposition eingenommen hat, erfolgt eine Aktivierung einer am Tragrahmen 5 angebrachten Verbindungseinheit zur Herstellung einer mechanischen Verbindung zwischen dem Tragrahmen 5 und dem Werkstück W.

Die Verbindungseinheit weist in dem in den Figuren 2a bis c illustrierten Ausführungsbeispiel drei am Tragrahmen 5 angebrachte Linearaktoren 7 auf, die allesamt über einen teleskopartigen, das heißt längenveränderlichen Mechanismus verfügen, der elektromotorisch, hydraulisch oder pneumatisch betätigbar ist. Im Falle des in den Figuren 2a bis c dargestellten Ausführungsbeispiels besteht jeder einzelne Linearaktor 7 aus einer pneumatischen Hubzylindereinheit dessen Pneumatikzylinder 7.1 jeweils mittels einer ventilgesteuerten Pneumatikeinheit 7.2 längenverstellbar sind (siehe hierzu Doppelpfeildarstellungen in den Figuren 2a, b).

An den dem Tragrahmen 5 abgewandten Enden der Pneumatikzylinder 7.1 sind jeweils pneumatisch mittels Unterdruck aktivierbare als Vakuumsauggreifer ausgebildete Fügemittel 8 angebracht. Vorzugsweise sind die Vakuumsauggreifer kugelgelenkig mit den Enden der Pneumatikzylinder 7.1 verbunden, um auf diese Weise bei einem Flächenkontakt automatisch in eine korrekte Kontaktlage zu gelangen. Zudem sind die drei Linearaktoren 7 derart um das zentral angeordnete Bohrwerkzeug 10 angeordnet, so dass das Bohrwerkzeug 10 im Flächenschwerpunkt eines durch die Linearaktoren 7 aufgespannten gleichseitigen Dreiecks, siehe strichpunktierte Linien in Fig. 2c, liegt.

Zum Zwecke der Herstellung einer mechanischen Verbindung zwischen dem zweiten Armglied 3 des Kinematikroboters KR und dem Werkstück W werden die Pneumatikzylinder 7.1 einzeln und fein dosiert und unabhängig voneinander ausgefahren, bis die als Vakuumsauggreifer ausgebildeten Fügemittel 8 die Werkstückoberfläche berühren. Hierzu werden die Pneumatikzylinder 7.1 über an der Pneumatikeinheit 7.2 vorgesehene Proportionalventile mit geringem Überdruck ausgefahren, bis die schon saugenden Vakuumgreifer die Werkstückoberfläche berühren und sich an der Oberfläche fixieren. Dies verhindert ein Auswandern der Bohreranordnung B durch die im System des Knickarmroboters KR vorhandenen unterschiedlichen Steifigkeiten.

Im Weiteren wird der mechanische Anpressdruck, mit dem die Fügemittel 8 an der Werkstückoberfläche aufliegen, erhöht. Hierzu wird über die an den Pneumatikeinheiten 7.2 vorgesehenen Proportionalventile P ein höherer Druck eingestellt, wodurch der Tragrahmen 5 und sämtliche an diesen fest verbundenen Komponenten zwischen dem Werkstück und der kinematischen Kette des Knickarmroboters KR verspannt werden.

Im nächsten Schritt werden die Pneumatikzylinder 7.1 gesperrt, so dass sie nur als gespannte Federn wirken können. Hierbei stützt sich die gesamte kinematische Kette des Knickarmroboters KR und somit auch der Tragrahmen 5 mit sämtlichen an diesen befestigten Komponenten einseitig fest anhaftend an der Werkstückoberfläche ab, wobei die einseitige Einspannung eine elastisch federnde Lagerung darstellt, wodurch bearbeitungsbedingte Vibrationen und Schwingungen, die sich auf die kinematische Kette übertragen können, gedämpft werden.

In einem weiteren Schritt wird der ungefähre Abstand zwischen den Laserabstandssensoren 6 und der Werkstückoberfläche gemessen.

Die fest mit dem Tragrahmen 5 verbundene Bohranordnung B umfasst einen Spindelbohrer 9, der den Bohrer 10 antreibt. Der Bohrer 10 wird mit Hilfe einer NC-Vorschubeinheit 11 mit möglichst großer Geschwindigkeit möglichst dicht über die Werkstückoberfläche verfahren. Nunmehr folgt der Bohrvorschub bis ein Oberflächenkontakt zwischen Bohrer 10 und Werkstückoberfläche am Bearbeitungsort hergestellt ist. Der Bohrer 10 wird mit einer entsprechend vorgegebenen Drehzahl sowie Vorschubgeschwindigkeit in das Werkstück prozessüberwacht vorgetrieben, bis eine bestimmt vorgegebene Bohrlochtiefe erreicht ist. Die Prozessüberwachung erfolgt sensorüberwacht, beispielsweise durch Erfassung der Wirkleistung am Motor des NC-Vorschubs 11 und/oder des Spindelbohrers 9, oder mit Hilfe geeignet angebrachter Beschleunigungssensoren oder Kraftsensoren. Auch die am Tragrahmen 5 fest angebrachten Abstandssensoren 6 erfassen den Abstand zwischen dem Tragrahmen 5 und der Werkstückoberfläche während des Bohrvorganges, um diesen konstant zu halten. Sollte sich durch den Bohrervorschub ein Zurückweichen des Tragrahmens 5 ergeben, so wird dies mit den Laserabstandssensoren 6 erfasst und kann direkt ausgeglichen.

Auch die Detektion eines Bohrerbruchs ist mit den vorstehend genannten Überwachungsparametern möglich, so dass ein Schnellabbruch des Bohrvorganges eingeleitet werden kann.

Ist die gewünschte Bohrlochtiefe erreicht, so wird der Bohrer 10 mit Hilfe der NC-Vorschubeinheit 11 zurückgezogen und die Vakuumsaugnäpfe 8 von der Werkstückoberfläche gelöst. Der Knickarmroboter KR verfährt sodann die Bohreranordnung B an eine neue Raumposition, die einem weiteren Bearbeitungsort an der Werkstückoberfläche gegenüberliegt.

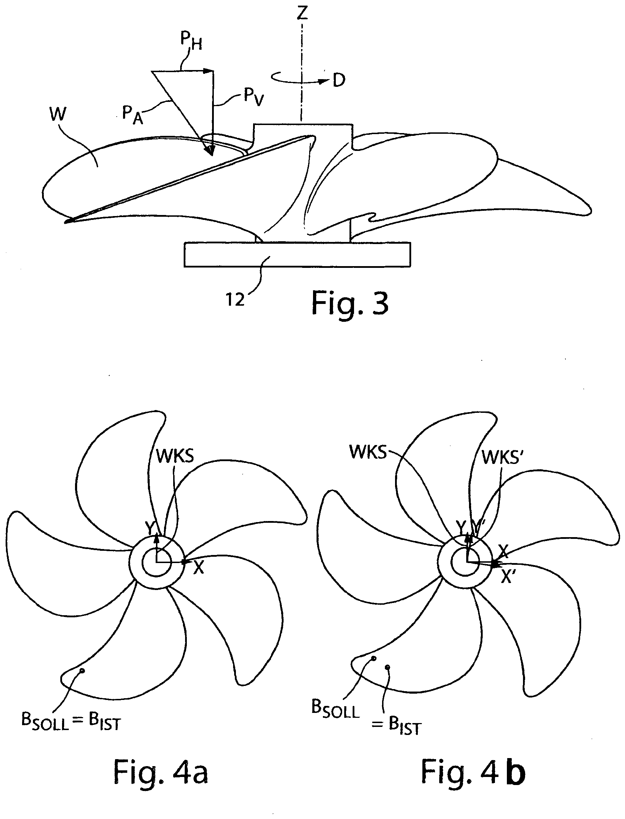

In Figur 3 ist eine Seitenansicht des in Figur 1 dargestellten Werkstückes W in Form eines Schiffspropellers illustriert, der zum Zwecke einer kontrollierten Rotation um die Vertikalachse Z und einer damit möglichen Ausrichtung des Schiffspropellers relativ zum seitlich angeordneten Knickarmroboter KR (nicht in Figur 3 dargestellt) auf einer motorisch angetrieben Drehplattform 12 lagert. Gilt es bspw. an der vertikal von oben zugänglichen Oberfläche des Schiffspropellers Bohrlöcher einzubringen, so wird die Bohranordnung B oberhalb der Bohrlochposition positioniert und die Pneumatikzylinder 7.1 fahren orthogonal zur Propellerblattoberfläche aus und kontaktieren diese mit den Vakuumsaugnäpfen 8, siehe Fig. 2a, 2b. Dabei wird eine orthogonal zur Propelleroberfläche orientierte Anpresskraft P_{A} erzeugt, die sich aus einer auf den Schiffpropeller einwirkenden Vertikalkraft Pv und einer Horizontalkraft P_{H} zusammensetzt. Vor allem die Horizontalkraft P_{H} bewirkt aufgrund der Schrägstellung des Propellerblattes ein Drehmoment D um die Vertikalachse Z, das aufgrund eines möglichen Lagerspiels in der Drehplattform 12 zu einer Verdrehung des Schiffspropellers führen kann. Die Drehrichtung sowie auch die Größe des Drehmomentes hängen neben der von Seiten des Knickarmroboters aufzuwendenden Anpresskraft P_{A} vom Ort und von der Schrägstellung des Propellerblattes ab.

Grundsätzlich sind die Koordinaten der Bohrpositionen bekannt und liegen als Punkt-Koordinatensätze im vorstehend erläuterten Werkstückkoordinatensystem WKS vor, wobei das Werkstückkoordinatensystem WKS mittels des Lasertrackers LT am ruhenden Werkstück W aufgenommen worden ist. Solang das Werkstück während der Bearbeitung keine Lageänderung erfährt, ermöglicht die den Knickarmroboter ansteuernde Steuereinheit eine hochgenaue Positionierung des Bohrwerkzeuges relativ zur Bohrposition.

Bei einer Bearbeitungsbedingten Lageänderung des Schiffspropellers, bspw. durch eine vorstehend beschriebene Drehung um die Vertikalachse Z, ändert sich das Werkstückkoordinatensystem WKS', so dass nun die bekannten Bohrpositions-Koordinaten nicht zum Lageveränderten Werkstückkoordinatensystem WKS' passen. Dies ist in den Figuren 4a, b dargestellt. In Figur 4a stimmen Soll- und Ist-Bohrlochkoordinaten Bₛₒₗₗ, Bᵢₛₜ im Werkstückkoordinatensystem WKS überein. In Figur 4b stimmen Soll- und Ist-Bohrlochkoordinaten Bₛₒₗₗ, Bᵢₛₜ aufgrund der Drehung des Schiffspropellers nicht überein, zumal sich durch das Anpressen des Knickarmroboters das ursprüngliche Werkstückkoordinatensystem WKS in das neue Werkstückkoordinatensystem WKS' transformiert.

Zur Korrektur dieser Fehlpositionierung wird das Werkstückkoordinatensystem in einem Zustand vermessen bzw. festgelegt, bei dem der Knickarmroboter gegen die Oberfläche des Schiffspropellers drückt. Auf der Grundlage des aktuell erhaltenen Werkstückkoordinatensystems können die bekannten Bohrlochkoordinaten, die bspw. aus einem CAD-System gewonnen werden, angewandt werden.

Der Vorgang des Einmessens des Werkstückkoordinatensystems kann einmalig oder vor jedem einzelnen Bohrvorgang, jeweils durch Anpressen der Bohranordnung an der jeweils aktuellen Bohrposition durchgeführt werden. Hierdurch kann der Fehler durch Lageänderung vollständig eliminiert werden.

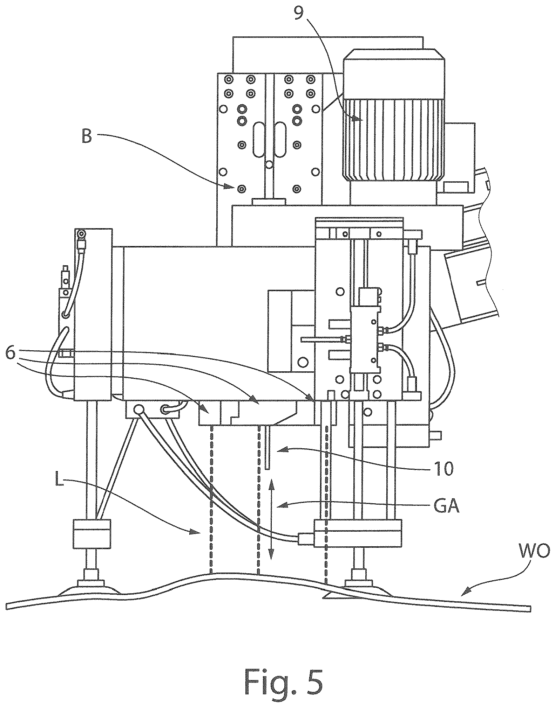

Ist der vorstehende Positioniervorgang abgeschlossen, hat sich jedoch insbesondere bei unebenen Werkstückoberflächen gezeigt, dass es zu unerwünschten Ungenauigkeiten beim Bohrvorgang hinsichtlich der erzielbaren, gewünschten Bohrlochtiefe, der sogenannten Soll-Bohrlochtiefe, kommen kann. Zur Behebung dieser Ungenauigkeit beim Bohren an unebenen Werkstückoberflächen dient eine bevorzugte Bohrstrategie, die anhand der Figuren 5 bis 8 erläutert wird.

Figur 5 stellt eine an der Werkstückoberfläche WO exakt positionierte Bohranordnung B dar. Der das Bohrwerkzeug 10 in Rotation versetzende Spindelbohrer 9 wird aktiviert sowie die NC-Vorschubeinheit 11 fährt im Eilgang (200mm/s) vor, bis ca. 10 mm über die Werkstückoberfläche WO. Da die genaue Ausprägung der Werkstückoberfläche WO nicht vollständig bekannt ist, besteht hier eine Unsicherheit. So ist es durchaus denkbar, dass die Werkstückoberfläche WO eine lokale Erhebung E aufweist. Ist sie größer als bspw. 10 mm kann das Bohrwerkzeug 10 abbrechen, wenn das Bohrwerkzeug 10 mit einer so großen Geschwindigkeit auf die Werkstückoberfläche WO trifft.

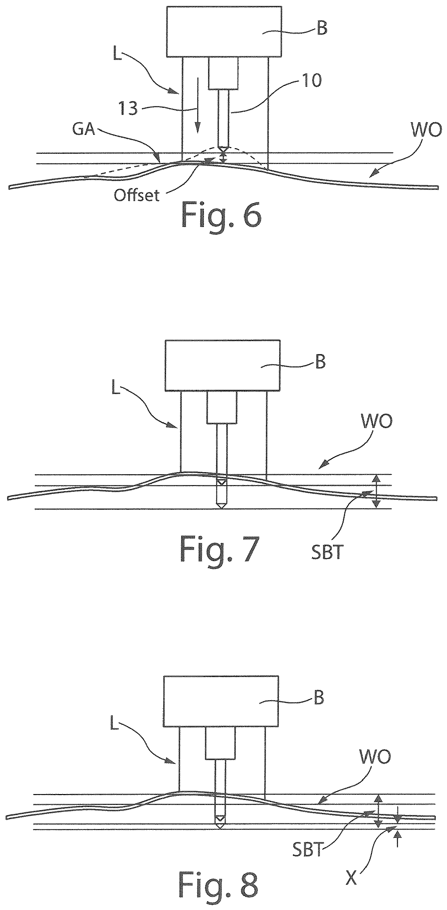

Zur Begegnung des Problems wird der Abstand zur Werkstückoberfläche WO mit den drei Laserabstandssensoren 6 an der Bohreranordnung B gemessen, siehe Figur 6. Da auch die Krümmung der Oberfläche nicht bekannt ist, wird hier ein geschätzter Wert, bspw. 10mm als Offset benutzt. Alle drei Sensoren messen mittels Laserstrahl L einen Abstand zur Werkstückoberfläche WO. Anschließend erfolgt eine Prüfung auf Plausibilität; ist diese gegeben ist, wird ein Mittelwert über die drei Abstandsmesswerte gebildet. Von dem gemittelten Abstandswert GA wird der Offset zur Berücksichtigung einer möglichen Oberflächenkrümmung abgezogen, wodurch ein erster Verfahr-Abschnitt 13 erhalten wird, längs dem das Bohrwerkzeug 10 mit der hohen Verfahrgeschwindigkeit im Eilgang von bspw. 200mm/s, verfahren wird. Nähert sich das Bohrwerkzeug 10 im Bereich des Offsets, das einem zweiten Abschnitt entspricht, der Werkstückoberfläche WO an, so wird das Bohrwerkzeug 10 lediglich mit einer üblichen Bohrvorschubgeschwindigkeit von ca. 6 mm/ s verfahren. Die Unterteilung des gemittelten Abstandes in zwei Abschnitte ist aus betriebssicherheitsrelevanten sowie auch betriebswirtschaftlichen Gründen wichtig, um einen möglichst kurzen Bohrprozess zu erzielen, denn je länger das Bohrwerkzeug 10 mit der reduzierten Bohrvorschubgeschwindigkeit (nur ca. 6 mm/s) gefahren wird, desto länger dauert der ganze Prozess. Wenn bspw. das Bohrwerkzeug 10 längs des gesamten ersten Abschnittes, bspw. 24 mm, mit nur 6 mm/s verfahren würde, so benötigt man pro Bohrlochloch 4 sec. länger als im vorstehend erläuterten Fall. Bei 1000 Bohrungen beträgt der Zeitunterschied bereits mehr als eine ganze Stunde.

Innerhalb des Offset- Bereiches fährt das Bohrwerkzeug 10 mit der Bohrvorschubgeschwindigkeit vor, bis das Bohrwerkzeug 10 Kontakt mit der Werkstückoberfläche WO bekommt. Dieser Erstkontakt wird über die elektrische Wirkleistung des Spindelbohrers 9 überwacht. Steigt die Wirkleistung über einen charakteristischen Schwellwert an, so gilt der Anschnitt als erkannt. In diesem Fall wird ein digitales Signal an die Steuerung weitergegeben. Dieses Signal führt dazu, dass alle drei Laserabstandssensoren 6 "genullt" werden, wodurch im Weiteren nur noch das Eindringen des Bohrwerkzeuges 10 in das Werkstück W gemessen wird, siehe Figur 7. Wird die gewünschte Bohrtiefe SBT, abzüglich eines Weges X, der erforderlich ist den Vorschub auf Null abzubremsen, erreicht, wird der Vorschub erst maximal bis zum Stillstand verzögert und dann in die Ausfahrrichtung beschleunigt.

Mit dem erfindungsgemäßen Verfahren sowie einer hierfür geeigneten Anordnung zur Oberflächenbearbeitung eines stationär gelagerten Werkstückes ist es möglich Bohrlöcher mit sehr hoher Genauigkeit an beliebig gekrümmten Werkstückoberflächen zu bohren und dies nahezu unabhängig von der Steifigkeit und Absolutgenauigkeit des Knickarmrobotersystems.

### Bezugszeichenliste

- 1: Roboterbasis
- 2: Erstes Armglied
- 3: Zweites Armglied
- 4: Zentralhand
- 5: Tragrahmen
- 6: Laserabstandssensoren
- 7: Verbindungseinheit, Linearaktor
- 7.1: Pneumatikzylinder
- 7.2: Pneumatikeinheit
- 8: Fügemittel
- 9: Spindelbohrer
- 10: Bohrer
- 11: NC-Vorschubeinheit
- 12: Drehplattform
- 13: Erster Abstand
- D: Drehmoment
- Z: Vertikalachse
- A2: Zweite Achse
- B: Bohranordnung
- KR: Knickarmroboter
- GA: Gemittelter Abstandswert
- M1: Markierung
- M2: Markierung
- S: Steuereinheit
- W: Werkstück
- WO: Werkstückoberfläche
- LT: Lasertracker
- L: Laserstrahl
- P: Proportionalventil
- P_{A}: Anpresskraft
- P_{H}: Horizontal kraft
- P_{V}: Vertikalkraft
- SBT: Soll-Bohrlochtiefe
- WKS, WKS': Werkstückkoordinatensystem
- X: Abbremsweg

## Patentansprüche

1. Verfahren zum hochgenauen Einbringen von Bohrlöchern in eine Oberfläche, die vorzugsweise eine Freiformoberfläche ist, eines stationär gelagerten Werkstückes (W) mit einem an einem Knickarmroboter (KR) endseitig angebrachten und von diesem räumlich positionierbaren Bohrwerkzeug, umfassend folgende Verfahrensschritte:
- Positionieren des Knickarmroboter-geführten Bohrwerkzeuges (10) an eine Raumposition, die einem vorgegebenen Bearbeitungsort an der Werkstückoberfläche in einem vorgegebenen Abstand gegenüberliegt, auf der Grundlage eines die Raumform des zu bearbeitenden Werkstückes beschreibenden binären Datensatzes, des an der Werkstückoberfläche vorgegebenen Bearbeitungsortes, sowie eines dem Werkzeug zugeordneten Werkzeugmittelpunktes, wobei die relative räumliche Position des Knickarmroboter-geführten Bohrwerkzeuges zum vorgegebenen Bearbeitungsort an der Werkstückoberfläche messtechnisch erfasst und überwacht wird, wobei die messtechnische Erfassung mittels eines berührungslosen Trackingsystems (LT) erfolgt, das zumindest ein die räumliche Lage des Werkstückes beschreibendes Werkstückkoordinatensystem (WKS) sowie ein die räumliche Lage des Knickarmroboters beschreibendes Roboterkoordinatensystem (RKS) generiert, die beide in einen räumlichen Bezug zueinander gebracht werden,
- Herstellen einer den Knickarmroboter endseitig am Werkstück abstützenden und an der Werkstückoberfläche lösbaren, festen mechanischen Verbindung in Art einer festen Einspannung, bei der sich der Knickarmroboter einseitig an der Werkstückoberfläche abstützt und längs des Knickarmroboters wirkende Kräfte und Momente aufnimmt, wobei drei endseitig am Knickarmroboter angebrachte Linearaktoren (7), die jeweils ein dem Werkstück zugewandtes Fügemittel (8) aufweisen, einzeln, feindosiert und unabhängig voneinander betätigt werden, und wobei die Linearaktoren bei dem ansonsten positionierten und ruhenden Knickarmroboter die Werkstückoberfläche über die Fügemittel kontaktieren, und
- Annähern des Bohrwerkzeuges an den Bearbeitungsort mittels einer endseitig am Knickarmroboter angebrachten NC-Vorschubeinheit (11) und anschließender Ineingriffnahme des Bohrwerkzeuges mit dem Werkstück am Bearbeitungsort an der Werkstückoberfläche, während der Knickarmroboter endseitig mit dem Werkstück verbunden ist, wobei der Bohrvorgang prozessüberwacht auf der Grundlage von mit einer die Relativlage des Bohrwerkzeuges zur Werkstückoberfläche erfassenden, endseitig am Knickarmroboter angebrachten Sensorik gewonnenen Informationen durchgeführt wird und der Bohrvorgang bei Erreichen einer vorgegebenen Bohrtiefe beendet wird,
**dadurch gekennzeichnet, dass** das Generieren des Werkstückkoordinatensystems (WKS) und des Roboterkoordinatensystems (RKS) in einem Zustand erfolgt, bei dem der Knickarmroboter (KR) kraftbeaufschlagt mit dem Werkstück (W) in Wirkverbindung steht, und dass eine Kontrolle und gegebenenfalls eine Korrektur der räumlichen Lage des am Knickarmroboter endseitig angebrachten und von diesem an die Raumposition positionierten Bohrwerkzeuges (10) relativ zum Bearbeitungsort an der Werkstückoberfläche auf Grundlage der durch das berührungslose Trackingsystem (LT) unter Kraftbeaufschlagung generierten Koordinatensysteme durchgeführt wird, so dass das Bohrwerkzeug an der Raumposition eine Solllage einnimmt.

2. Verfahren nach Anspruch 1,
**dadurch gekennzeichnet, dass** das Generieren des Werkstückkoordinatensystems und des Roboterkoordinatensystems in einem Zustand erfolgt, bei dem der Knickarmroboter kraftbeaufschlagt am Bearbeitungsort oder im Bereich des Bearbeitungsortes mit dem Werkstück in Wirkverbindung steht.

3. Verfahren nach Anspruch 1 oder 2,
**dadurch gekennzeichnet, dass** auf der Grundlage der mit der endseitig am Knickarmroboter angebrachten Sensorik gewonnenen Informationen die exakte Bohrlochtiefe bestimmt wird und/oder die räumliche Lage des Bohrwerkzeuges zur Werkstückoberfläche im Bereich des Bearbeitungsortes bestimmt wird.

4. Verfahren nach einem der Ansprüche 1 bis Anspruch 3,
**dadurch gekennzeichnet, dass** nach Herstellen der den Knickarmroboter endseitig am Werkstück abstützenden und an der Werkstückoberfläche lösbaren, festen mechanischen Verbindung vermittels der endseitig am Knickarmroboter angebrachten Sensorik ein Abstand zur Werkstückoberfläche gemessen wird,
dass der gemessene Abstand in wenigstens zwei Abschnitte unterteilt wird, einen dem Knickarmroboter zugewandten ersten Abschnitt und einen der Werkstückoberfläche zugewandten zweiten Abschnitt, und
dass das Bohrwerkzeug mittels der endseitig am Knickarmroboter angebrachten NC-Vorschubeinheit längs des ersten Abschnittes mit einer größeren Vorschubgeschwindigkeit gegen das Werkstück verfahren wird als längs des zweiten Abschnittes.

5. Verfahren nach Anspruch 4,
**dadurch gekennzeichnet, dass** das Bohrwerkzeug mittels der endseitig am Knickarmroboter angebrachten NC-Vorschubeinheit längs des ersten und zweiten Abschnittes verfahren wird,
dass während des Verfahrens des Bohrwerkzeugt zumindest längs des zweiten Abschnittes das Bohrwerkzeug mittels eines Spindelbohrers motorisch in Rotation versetzt wird, und
dass eine am Spindelbohrer abgreifbare elektrische Wirkleistung gemessen wird, die zur Detektion eines Erstkontaktes zwischen Bohrwerkzeug und Werkstückoberfläche herangezogen wird.

## Claims

1. Method for high-precision introduction of boreholes into a surface, which is preferably a freeform surface of a workpiece (W) mounted in a stationary manner using a boring tool that is attached to the end face of an articulated-arm robot (KR) and which can be spatially positioned thereby, comprising the following method steps:
- positioning the boring tool (10) guided by the articulated-arm robot at a spatial position which lies opposite a specified machining location on the workpiece surface at a specified distance therefrom, on the basis of a binary dataset which describes the spatial form of the workpiece to be machined, of the specified machining location on the workpiece surface, and of a tool centre point assigned to the tool, wherein the spatial position of the boring tool guided by the articulated-arm robot relative to the specified machining location on the workpiece surface is captured and tracked, wherein the metrological capture is assured by means of a contactless tracking system (LT) which generates at least a workpiece coordinate system (WKS) describing the spatial locus of the workpiece and a robot coordinate system (RKS) describing the spatial locus of the articulated-arm robot, which are both spatially correlated with each other,
- producing a rigid mechanical connection which supports the end face of the articulated-arm robot on the workpiece in the manner of a rigid clamping and which can be released from the workpiece surface, in which one side of the articulated-arm robot is supported on the workpiece surface, and absorbs forces and moments acting along the articulated-arm robot, wherein three linear actuators (7) mounted on the end face of the articulated-arm robot, each having a joining means (8) facing the workpiece, are actuated individually, precisely and independently of each other, and wherein the linear actuators on the otherwise positioned and idling articulated-arm robot contact the workpiece surface via the joining means, and
- moving the boring tool towards the machining location by means of an NC advancing unit (11) attached to the end face of the articulated-arm robot and subsequently engaging the boring tool with the workpiece at the machining location on the workpiece surface while the end face of the articulated-arm robot is connected to the workpiece, wherein the boring operation is monitored on the basis of information obtained using a sensor system which detects the position of the boring tool relative to the workpiece surface and which is attached to the end face of the articulated-arm robot, and the boring process is terminated upon reaching a specified boring depth,
**characterized in that** the generation of the workpiece coordinate system (WKS) and of the robot coordinate system (RKS) is carried out in a state in which the articulated-arm robot (KR) under force application is in operative connection with the workpiece (W), and that a check and if necessary adjustment of the spatial position of the boring tool (10) which is attached to the end face of the articulated-arm robot and positioned thereby against the spatial position relative to the machining location on the workpiece surface is carried out on the basis of the coordinate systems that are generated under application of force by the contactless tracking system (LT), so that the boring tool assumes a target locus at the spatial position.

2. Method according to Claim 1,
**characterized in that** the generation of the workpiece coordinate system and of the robot coordinate system is carried out in a state in which the articulated-arm robot under force application at the machining location or in the region of the machining location is in operative connection with the workpiece.

3. Method according to Claim 1 or 2,
**characterized in that** the exact borehole depth is determined and/or the spatial locus of the boring tool relative to the workpiece surface in the region of the machining location is determined on the basis of the information obtained using a sensor system mounted on the end face of the articulated-arm robot.

4. Method according to any one of Claims 1 to 3,
**characterized in that** after producing the rigid mechanical connection which supports the end face of the articulated-arm robot on the workpiece and which can be released from the workpiece surface, a distance from the workpiece surface is measured using the sensor system mounted on the end face of the articulated-arm robot,
that the measured distance is divided into at least two sections, a first section facing the articulated-arm robot and a second section facing the workpiece surface, and that the boring tool is driven towards the workpiece along the first section by means of the NC advancing unit attached to the end face of the articulated-arm robot at a greater advance speed than along the second section.

5. Method according to Claim 4,
**characterized in that** the boring tool is driven along the first and second sections by means of the NC advancing unit attached to the end face of the articulated-arm robot,
that while the boring tool is being driven at least along the second section the boring tool is caused to rotate by means of a motorised spindle drill, and
that an electrical power drawn at the spindle drill is measured and used to detect a first contact between the boring tool and the workpiece surface.

## Revendications

1. Méthode de perçage de trous à haute précision dans une surface, qui est de préférence une surface de forme libre, d'une pièce positionnée fixement (W) avec un outil de perçage fixé à l'extrémité d'un robot à bras articulé (KR) et positionnable spatialement par celui-ci, comprenant les étapes de processus suivantes :
- positionnement de l'outil de perçage articulé robotisé (10) sur une position spatiale qui se trouve en face d'un emplacement d'usinage spécifié sur la surface de la pièce à une distance spécifiée, sur la base d'un ensemble de données binaires décrivant la forme spatiale de la pièce à usiner, l'emplacement d'usinage spécifié sur la surface de la pièce et un point central d'outil affecté à l'outil, dans lequel la position relative spatiale de l'outil de perçage guidé par robot à bras articulé à l'emplacement d'usinage spécifié sur la surface de la pièce est enregistrée et surveillée par une technologie de mesure, dans lequel la détection par la technologie de mesure a lieu au moyen d'un système de suivi (LT) à capteur sans contact, qui génère au moins un système de coordonnées de pièce (WKS) décrivant la position spatiale de la pièce et un système de coordonnées de robot (RKS) décrivant la position spatiale du robot à bras articulé, qui sont tous deux mis en relation spatiale les uns avec les autres,
- établissement d'une liaison mécanique fixe qui supporte le robot à bras articulé à l'extrémité de la pièce et est détachable sur la surface de la pièce à la manière d'un serrage fixe, dans lequel le robot à bras articulé supporte d'un côté la surface de la pièce et absorbe les forces et les moments agissant le long du robot à bras articulé, dans lequel trois actionneurs linéaires (7) fixés à l'extrémité du robot à bras articulé qui comportent chacun un moyen de jonction (8) tourné vers la pièce, sont actionnés individuellement, avec un dosage fin et indépendamment les uns des autres, et dans lequel les actionneurs linéaires dans le robot à bras articulé qui est par ailleurs positionné et immobile contactent la surface de la pièce via les moyens d'assemblage, et
- rapprochement de l'outil de perçage du lieu d'usinage au moyen d'une unité d'avance NC (11) à l'extrémité du robot à bras articulé et ensuite intervention de l'outil de perçage sur la pièce à usiner à l'emplacement d'usinage sur la surface de la pièce, tandis que le robot à bras articulé est raccordé à la pièce du côté d'extrémité, dans lequel le processus de perçage est surveillé et effectué sur la base des informations obtenues par un système de capteurs qui détecte la position relative de l'outil de perçage par rapport à la surface de la pièce et est fixé à l'extrémité du robot à bras articulé et le processus de perçage est terminé lorsqu'une profondeur de perçage prédéterminée est atteinte,
**caractérisé en ce que** la génération du système de coordonnées de pièces (WKS) et du système de coordonnées de robot (RKS) a lieu dans un état dans lequel le robot à bras articulé I (KR) est en liaison de travail avec la pièce (W), et cela permet un contrôle et, le cas échéant, une correction de la position spatiale de l'outil de perçage (10) par rapport à l'emplacement d'usinage sur la surface de la pièce sur la base du système de coordonnées de suivi sans contact (LT) générées sous l'application de force, de sorte que l'outil de perçage adopte une position souhaitée à la position spatiale.

2. Procédé selon la revendication 1,
**caractérisé en ce que** la génération du système de coordonnées de pièce et du système de coordonnées de robot s'effectue dans un état dans lequel le robot à bras articulé est sollicité en force au niveau de l'emplacement de traitement ou dans la zone de l'emplacement de traitement avec la pièce en liaison opérationnelle.

3. Procédé selon la revendication 1 ou 2,
**caractérisé en ce que** la profondeur exacte du trou de perçage est déterminée à partir des informations obtenues avec les capteurs fixés à l'extrémité du robot à bras articulé et/ou de la position spatiale de l'outil de perçage par rapport à la surface de la pièce dans la zone de l'emplacement d'usinage.

4. Procédé selon une quelconque des revendications 1 à 3,
**caractérisé en ce qu**'après l'établissement de la liaison mécanique fixe supportant le robot à bras articulé du côté d'extrémité sur la pièce et déblocable sur la surface de la pièce, une distance par rapport à la surface de la pièce est mesurée au moyen des capteurs fixés à l'extrémité du robot à bras articulé,
en ce que la distance mesurée est divisée en au moins deux sections, une première section tournée vers le robot à bras articulé et une deuxième section faisant face à la surface de la pièce, et en ce que l'outil de perçage est déplacé au moyen de l'unité d'avance NC fixée à l'extrémité du robot à bras articulé le long de la première section avec une plus grande vitesse d'avance par rapport à la pièce que le long de la deuxième section.

5. Procédé selon la revendication 4,
**caractérisé en ce que** l'outil de perçage est déplacé au moyen de l'unité d'avance NC fixée de manière articulée à un robot le long de la première et la deuxième section de sorte que pendant le déplacement de l'outil de perçage,
au moins le long de la deuxième section, l'outil de perçage soit mis en rotation de manière motorisée au moyen d'un foret à broche, et
qu'une puissance électrique active qui peut être prélevée sur le foret à broche est mesurée, qui est utilisé pour détecter un premier contact entre l'outil de perçage et la surface de la pièce.
